# EUROPÄISCHE PATENTSCHRIFT

(11) **EP 0 616 401 B1**
(45) Veröffentlichungstag und Bekanntmachung des Hinweises auf die Patenterteilung: **30.07.1997**
(21) Anmeldenummer: 94101574.5
(22) Anmeldetag: 02.02.1994
(51) Int. Cl.: H02B 1/20, H01B 7/08

(54) **Stromschienenpaket**
Busbar package
Pile de barres omnibus

(30) Priorität: 16.03.1993 DE 9303886 U
(43) Veröffentlichungstag der Anmeldung: 21.09.1994
(73) Patentinhaber: Siemens Nixdorf Informationssysteme Aktiengesellschaft, 33102 Paderborn (DE)
(72) Erfinder: Knoop, Franz-Josef, D-33142 Büren-Steinhausen (DE); Schmidt, Heinrich, D-33129 Delbrück-Boke (DE)
(74) Vertreter: Fuchs, Franz-Josef, Dr.-Ing.

(56) Entgegenhaltungen:
- EP-A- 0 050 547
- DE-B- 1 465 167

## Beschreibung

Die Erfindung betrifft ein Stromschienenpaket aus gegeneinander elektrisch isolierten Stromschienen.

In Aufbausystemen elektronischer Steuerungs-, Nachrichtenvermittlungs- und Datenverarbeitungsanlagen müssen eine oder mehrere Spannungen von einer Stromversorgung ausgehend auf die im allgemeinen auf Einsteckbaugruppen verteilte Elektronik geführt werden. Die Einsteckbaugruppen sind untereinander über eine häufig als gedruckte Schaltung ausgebildete Verbindungsrückwand zusammengeschaltet. Die Spannungsversorgung kann im allgemeinen aber nicht über diese Verbindungsrückwand erfolgen, weil gedruckte Leiterbahnen für die zu beherrschenden Ströme einen zu hohen Leitungswiderstand und eine zu hohe Induktivität aufweisen. Aus diesem Grunde werden die Versorgungsspannungen auf Stromschienen großen Querschnitts geführt, die aus Platzgründen zu Paketen zusammengefaßt sind.

Aus der DE 34 05 996 C2 ist ein Stromschienenpaket bekannt, bei dem jede Stromschiene in einem U-förmigen Isolierprofil angeordnet ist. Als Haltemittel zum Zusammenhalten des Stromschienenpakets sind die Isolierprofile verschiebbar umschließende aus elastischem Kunststoff bestehende Bügel vorgesehen.

Das bekannte Stromschienenpaket ist für den vorgesehenen Zweck, aneinandergereihte Installationsgeräte mit einem vorgegebenen Teilungsmaß und in einer Ebene liegenden elektrischen Anschlüssen zu verbinden, gut geeignet. Es ist jedoch nur bedingt für die Stromversorgung elektronischer Steuerungs-, Nachrichtenvermittlungs- oder Datenverarbeitungsanlagen geeignet.

In diesen Anlagen müssen verschiedene Spannungen geführt werden, deren Strombelastung im allgemeinen sehr unterschiedlich ist. Damit kommen auch Stromschienen unterschiedlichen Querschnitts zum Einsatz, für deren jede ein anderes Isolierprofil vorgehalten werden müßte. Ferner liegen bei den genannten elektronischen Geräten die Anschlüsse oft nicht in einer Ebene, was zu kompliziert geformten Isolierprofilen führen würde, deren Herstellung teuer und deren Lagerhaltung platzraubend ist. Schließlich läßt der Bügel nur einen fest vorgegebenen Querschnitt des Gesamtpakets zu. Die Zahl, Höhe und Dicke der Stromschienen kann nicht verändert werden, ohne jeweils einen speziell angepaßten Bügel vorzusehen. Auch ist der bekannte Bügel nicht geeignet, gestreckte Stromschienen enthaltende Pakete zusammenzuhalten, die noch nicht in eine Anlage eingebaut sind. Vielmehr könnten die einzelnen Schienen sich längs verschieben, wodurch das Paket auseinanderfallen würde.

In der DE-B-14 65 167 ist eine Anordnung mit mehreren Sammelschienen beschrieben, deren jede von einem Isoliermantel umhüllt ist. Als besonders vorteilhaft wird ein Isolierverfahren angesehen, bei dem ein isolierendes Gewebe mit einem aushärtbaren Klebstoff auf die Sammelschienen fest aufgebracht wird. Die Sammelschienen werden durch Schrauben zusammengehalten, die in miteinander fluchtende Bohrungen eingesetzt sind. Damit die Schrauben keine elektrische Verbindung zwischen den einzelnen Sammelschienen bilden können, müssen die Bohrungen in den Leitern größer sein als die entsprechenden Bohrungen im Isoliermantel.

Der Aspekt des Recyclings von elektronischen Anlagen ist in der DE-C-34 05 996 und der DE-B-14 65 167 nicht angesprochen.

Es ist Aufgabe der Erfindung, ein Stromschienenpaket vorzuschlagen, bei dem die Anzahl der Stromschienen und deren Format in weiten Grenzen veränderbar ist und das einfach zu montieren sowie im Sinne einer leichten Sortierbarkeit nach Materialgruppen wieder zu demontieren ist.

Diese Aufgabe wird durch die Merkmale des Hauptanspruchs gelöst.

Um der Forderung nach leichter Wiedergewinnung von Rohstoffen beim Recycling Rechnung zu tragen, sind die Einzelteile des Stromschienenpakets nur lose zusammengefügt: Auf das blanke Metall der Stromschienen sind weder Isolierlacke noch Klebemittel zum Halten von Isoliermaterialien aufgetragen. Diese sind vielmehr lose auf und zwischen die Stromschienen gelegte Folien. Das ganze, aus abwechselnden Lagen von Stromschienen und Isoliermateriallagen bestehende Stromschienenpaket ist an einer oder auch - je nach der Geometrie des Paketes - an mehreren Stellen mit Durchbrüchen versehen, in die Verbindungselemente eingesetzt sind. Diese weisen an ihren Enden Kopfteile auf, die einen größeren Durchmesser haben als die Durchbrüche. Die Kopfteile kommen also auf den Außenseiten des Stromschienenpaketes zu liegen. Die Durchbrüche selbst sind von einem zwischen den Kopfteilen sich erstreckenden Schaft durchsetzt.

Die Verbindungselemente sind vorzugsweise aus Kunststoff gefertigt. Deshalb wahren sie, obwohl sie alle Stromschienen durchdringen, die elektrische Isolation zwischen diesen. Desweiteren sind sie so gestaltet, daß sie in einfacher Weise, vorzugsweise unter Verzicht auf Montagewerkzeuge, montierbar und auch wieder demontierbar sind.

Zur Demontage werden in einfacher Weise die Verbindungselemente gelöst, worauf das Stromschienenpaket in seine Einzelteile zerfällt. Die Metallteile sind leicht von den Nichtmetallen zu separieren. Die Isoliermateriallagen sind vorzugsweise einfache Stanzteile aus Isolierfolien, die aufgrund ihrer Verschleißarmut wiederverwertet werden können. Die Verbindungselemente sind im Vergleich zum Stromschienenpaket so klein, daß nur minimale Mengen von Kunststoffabfall entstehen. Sind sie, wie dies für eine bevorzugte Ausführungsform vorgeschlagen wird, aus einem, und nur einem thermoplastischen Kunststoff, kann auch dieser leicht wiederverwertet werden.

Die Verbindungselemente sind aus zwei miteinander verrastbaren Teilen gebildet. Die Schaftlänge ist dabei in weiten Grenzen einstellbar.

Dadurch wird es möglich, eine beliebige Zahl von Stromschienen in einem Paket zusammenzufassen. Auch darf deren Stärke variieren. Aufgrund der leichten Lösbarkeit der Verbindungselemente kann ein Umbau des Stromschienenpakets auch leicht im Feld vorgenommen werden.

Vorzugsweise haben die Durchbrüche gegenüber dem Schaft des Verbindungselements einen so viel größeren Durchmesser, daß die Stromschienen ein gewisses Spiel gegeneinander haben. Damit können zum einen Ungenauigkeiten beim Stanzen der Durchbrüche und andererseits Maßtoleranzen zwischen den durch die Stromschienen zu verbindenden Punkten ausgeglichen werden. Darüber hinaus entsteht in den Durchbrüchen der für ein Verrasten des Schaftes nötige Freiraum.

Die Isoliermateriallagen bestehen vorzugsweise aus einem starren, allenfalls elastisch verformbaren Material. Dadurch wird die Handhabbarkeit der einzelnen Lagen des Stromschienenpakets verbessert und deren Reibung untereinander im Sinne eines erleichterten Toleranzausgleichs verringert.

In einer Weiterbildung des Stromschienenpakets stehen die Isoliermateriallagen über die Kanten der Stromschienen über. Dadurch werden die elektrischen Kriechstromwege verlängert. Eine vorteilhafte Doppelwirkung dieser Ausbildung der Erfindung ist darin zu sehen, daß dadurch auch eine ungewollte Kurzschlußbildung zwischen den Stromschienen, etwa durch ein von einem Servicetechniker fallengelassenes Werkzeug, verhindert wird.

Nachfolgend wird die Erfindung an Hand der Zeichnung eines Ausführungsbeispiels näher erläutert.
Es zeigen:
- Fig. 1: die Draufsicht auf ein Stromschienenpaket
- Fig. 2: die Seitenansicht des Stromschienenpakets nach Fig. 1
- Fig. 3: die perspektivische Ansicht eines Verbindungselementes

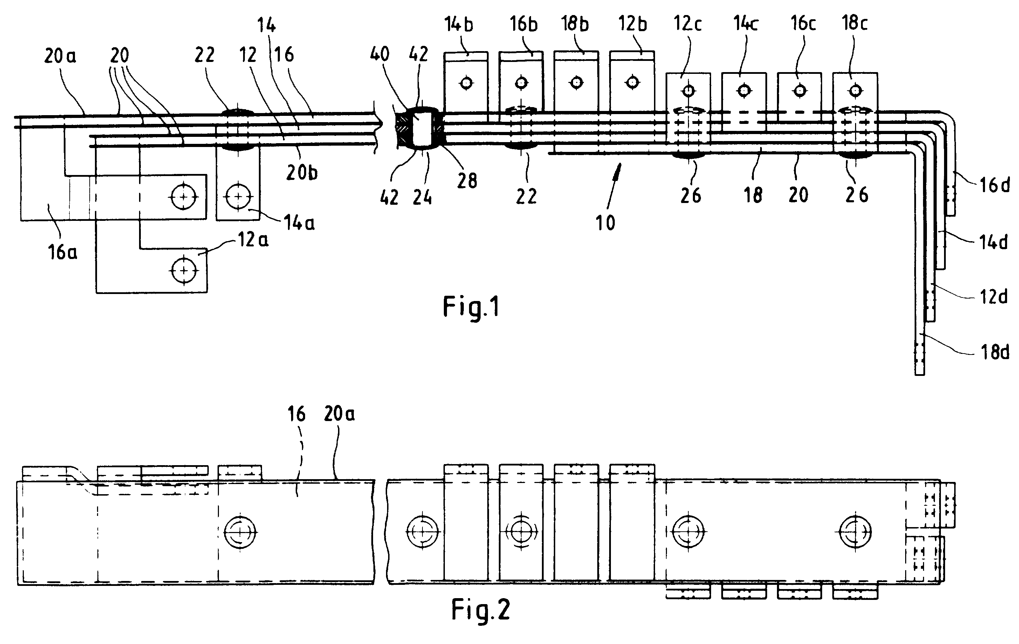

In Fig. 1 ist ein Stromschienenpaket allgemein mit 10 bezeichnet. Es besteht aus vier Stromschienen 12, 14, 16, 18. An die Stromschienen sind Anschlußfahnen 12a bis 18d an den Enden und im Mittelbereich einstückig angeformt und in unterschiedliche Richtungen abgebogen. Ihre Form und Anzahl ist für die Erfindung ohne Bedeutung, es soll lediglich gezeigt werden, daß sie Stromschienenpakete nahezu beliebiger Form zuläßt.

Jede Stromschiene 12 bis 18 ist in dem Bereich, in dem sie unmittelbar auf einer benachbarten Stromschiene liegt, zwischen Lagen aus glasfaserverstärkten Epoxidharz-Folien 20 eingeschlossen. Die Folien 20 überragen die Kanten der Stromschienen 12 bis 18. Dies ist in Fig. 2 beispielhaft an einer Folie 20a gezeigt, die die Stromschiene 16 an drei offen liegenden Kanten überragt.

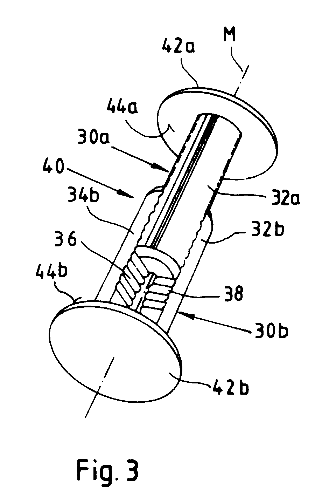

Das Stromschienenpaket 10 wird von Verbindungselementen 22, 24, 26 zusammengehalten. Jedes Verbindungselement besteht, wie später an Hand der Fig. 3 noch näher erläutert wird, aus einem Schaft 40, der in einen alle Stromschienen 12 bis 18 und alle Isolierfolien 20 fluchtend durchsetzenden Durchbruch 28 eingesetzt ist. An den Endes des Schaftes 40 weist das Verbindungselement 22, 24, 26 je einen Kopf 42 auf, dessen Durchmesser größer als der des Durchbruchs 28 ist. Die normal zur Längsachse des Verbindungselements stehenden, zum Schaft weisenden Kopf flächen 44 liegen dabei flach auf den Isolierfolien 20a bzw. 20b auf.

An Hand der Fig. 3 ist ein Verbindungselement im folgenden beschrieben. Es besteht aus zwei gleichen Teilen 30a, 30b.

Jedes hat einen etwa kreisscheibenförmigen Kopf 42a, 42b mit einer planen Fläche 44a, 44b. Auf diesen sind symmetrisch zu ihrer flächennormalen Mittellinie M zwei parallel zueinander stehende, im Querschnitt etwa viertelkreissektor-förmige Arme 32a, 34a (nicht sichtbar) bzw. 32b, 34b angeordnet. Die radialen Flächen 36 der Arme 32, 34 haben wellenförmige Erhebungen 38, wobei die Wellenlinien senkrecht zu der Mittellinie M stehen.

Zum Zusammenfügen der beiden Verbindungselementteile 30a, 30b werden diese um 90° um die Mittellinie M gegeneinander gedreht, so daß die Arme 32a, 34a des einen Verbindungselementteils 30a in die Aussparungen zwischen den Armen 32b, 34b des anderen Verbindungselementteils 30b greifen. Beider Arme 32a, 34a, 32b, 34b bilden zusammen den Schaft 40.

Werden die Köpfe 42a, 42b beider Verbindungselementteile 30a, 30b aufeinander zu gedrückt, wobei die Arme der beiden Teile 30a, 30b miteinander verrasten, so ergeben sich stabile Rastpositionen immer dann, wenn die Wellenberge der Flächen 36 des einen Armpaares die Wellenberge der Flächen 36 des anderen Armpaares hintergreifen. Bei in einen Durchbruch 28 eingesetzem Verbindungselement werden die Köpfe 42a, 42b so weit aufeinander zu gedrückt, bis ihre unteren Kopfflächen 44a, 44b die Isolierfolien 20a, 20b berühren. Die Arme 32a, 32b, 34a, 34b verrasten in dieser Stellung miteinander. Damit ist die Länge des Schaftes 40 auf die Paketdicke eingestellt. Es ist in Fig. 1 bei 22, 24, 26 zu erkennen, daß sich mit den gleichen Verbindungselementteilen 30 Verbindungselemente für unterschiedliche Paketdicken zusammenstellen lassen.

Zur Demontage des Stromschienenpakets 10 werden die beiden Verbindungselementteile 30a, 30b jeder Verbindung auseinandergezogen.

## Patentansprüche

1. Stromschienenpaket mit folgenden Merkmalen
- die Stromschienen (12, 14, 16, 18) sind ganzflächig mit Lagen (20, 20a, 20b) aus isolierendem Material, versehen,
- alle Stromschienen (12, 14, 16, 18) und Isoliermateriallagen (20, 20a, 20b) sind mit Durchbrüchen (28) versehen, wobei die Durchbrüche aller miteinander fluchten,
- das Stromschienenpaket (10) wird von Verbindungselementen (22, 24, 26) zusammengehalten, die aus auf den Außenseiten (20a, 20b) des Stromschienenpaketes (10) aufliegenden Kopfteilen (42a, 42b) und einem dazwischenliegenden, die Durchbrüche (28) durchsetzenden Schaft (40) bestehen, dessen Länge verstellbar ist,
**dadurch gekennzeichnet,**
daß die Isoliermateriallagen (20, 20a, 20b) lose zwischen bzw. auf die Stromschienen (12, 14, 16, 18) gelegt sind, das Verbindungselement (22, 24, 26) aus zwei Teilen (30a, 30b) besteht, die miteinander verrastbar sind, wobei die Länge des Schaftes (40) durch eine Vielzahl von Rastpositionen einstellbar ist und die Verbindungselemente (22, 24, 26) die Isolierung zwischen den Stromschienen (12, 14, 16, 18) wahren.

2. Stromschienenpaket nach Anspruch 1,
**dadurch gekennzeichnet,**
daß das Verbindungselement (22, 24, 26) aus elektrisch isolierendem, vorzugsweise thermoplastischem Kunststoff besteht.

3. Stromschienenpaket nach einem der Ansprüche 1 oder 2,
**dadurch gekennzeichnet,**
daß die Verbindungselemente (22, 24, 26) derart gestaltet sind, daß sie ohne Werkzeuge montierbar und wieder demontierbar sind.

4. Stromschienenpaket nach einem der Ansprüche 1 bis 3,
**dadurch gekennzeichnet,**
daß die Durchbrüche (28) einen um ein geringes Maß, vorzugsweise um ca. 1 mm größeren Durchmesser haben als der Schaft (40) des Verbindungselements.

5. Stromschienenpaket nach einem der Ansprüche 1 bis 4,
**dadurch gekennzeichnet,**
daß die Isoliermateriallagen (20, 20a, 20b) aus einem starren Material bestehen.

6. Stromschienenpaket nach Anspruch 5,
**dadurch gekennzeichnet,**
daß die Isoliermateriallagen (20, 20a, 20b) um ein geringes Maß, vorzugsweise um ca. 2,5 mm über die Kanten der Stromschienen (12, 14, 16, 18) überstehen.

## Claims

1. Busbar package having the following features
- the busbars (12, 14, 16, 18) are provided over the entire surface with layers (20, 20a, 20b) of insulating material,
- all the busbars (12, 14, 16, 18) and insulating material layers (20, 20a, 20b) are provided with apertures (28), the apertures all being aligned with one another,
- the busbar package (10) is held together by connecting elements (22, 24, 26) which comprise head parts (42a, 42b), which rest on the outer sides (20a, 20b) of the busbar package (10), and a shaft (40), which is located in between, passes through the apertures (28) and whose length is adjustable,
characterized
in that the insulating material layers (20, 20a, 20b) are placed loosely between or on the busbars (12, 14, 16, 18), the connecting element (22, 24, 26) comprises two parts (30a, 30b) which can be latched to one another, the length of the shaft (40) being adjustable by means of a multiplicity of latching positions, and the connecting elements (22, 24, 26) ensuring the insulation between the busbars (12, 14, 16, 18).

2. Busbar package according to Claim 1,
characterized
in that the connecting element (22, 24, 26) is made of electrically insulating, preferably thermoplastic, plastic.

3. Busbar package according to one of Claims 1 or 2,
characterized
in that the connecting elements (22, 24, 26) are designed in such a manner that they can be fitted and removed again without any tools.

4. Busbar package according to one of Claims 1 to 3,
characterized
in that the apertures (28) have a diameter which is larger by a small amount, preferably by about 1 mm, than the shaft (40) of the connecting element.

5. Busbar package according to one of Claims 1 to 4,
characterized
in that the insulating material layers (20, 20a, 20b) are made from a rigid material.

6. Busbar package according to Claim 5,
characterized
in that the insulating material layers (20, 20a, 20b) project by a small amount, preferably by about 2.5 mm, beyond the edges of the busbars (12, 14, 16, 18).

## Revendications

1. Jeu de rails conducteurs présentant les particularités suivantes
- les rails conducteurs (12, 14, 16, 18) sont pourvus sur toute leur surface de couches (20, 20a, 20b) en matériau isolant,
- tous les rails conducteurs (12, 14, 16, 18) et toutes les couches (20, 20a, 20b) de matériau isolant comportent des perçages (28), les perçages étant tous alignés entre eux,
- le jeu (10) de rails conducteurs est maintenu ensemble par des éléments de liaison (22, 24, 26) qui sont constitués d'éléments de tête (42a, 42b), qui prennent appui sur les faces extérieures (20a, 20b) du jeu (10) de rails conducteurs, entre lesquels est située une tige (40) de longueur réglable qui traverse les perçages (28),
caractérisé par le fait que,
les couches (20, 20a, 20b) de matériau isolant sont disposées de façon amovible entre ou sur les rails conducteurs (12, 14, 16, 18), l'élément de liaison (22, 24, 26) est constitué de deux parties (30a, 30b) qui peuvent être encliquetées l'une dans l'autre, la longueur de la tige (40) pouvant être réglée par une pluralité de positions d'encliquetage, et les éléments de liaison (22, 24, 26) préservent l'isolation entre les rails conducteurs (12, 14, 16, 18).

2. Jeu de rails conducteurs selon la revendication 1,
caractérisé par le fait que,
l'élément de liaison (22, 24, 26) est constitué de matériau électriquement isolant, de préférence de matière thermoplastique.

3. Jeu de rails conducteurs selon l'une des revendications 1 ou 2,
caractérisé par le fait que,
les éléments de liaison (22, 24, 26) sont agencés de telle sorte qu'ils peuvent être montés et à nouveau démontés sans outils.

4. Jeu de rails conducteurs selon l'une quelconque des revendications 1 à 3,
caractérisé par le fait que,
le diamètre des perçages (28) est légèrement supérieur, de préférence d'environ 1 mm, à celui de la tige (40) de l'élément de liaison.

5. Jeu de rails conducteurs selon l'une quelconque des revendications 1 à 4,
caractérisé par le fait que,
les couches (20, 20a, 20b) de matériau isolant sont constituées d'un matériau rigide.

6. Jeu de rails conducteurs selon la revendication 5,
caractérisé par le fait que,
les couches (20, 20a, 20b) de matériau isolant dépassent légèrement des bords des rails conducteurs (12, 14, 16, 18), de préférence d'environ 2,5 mm.
